# EUROPÄISCHE PATENTSCHRIFT

(11) **EP 0 780 596 B1**
(45) Veröffentlichungstag und Bekanntmachung des Hinweises auf die Patenterteilung: **01.08.2001**
(21) Anmeldenummer: 96118876.0
(22) Anmeldetag: 26.11.1996
(51) Int. Cl.: F16H 3/00, B60K 17/02, F16H 3/08

(54) **Zugkraftunterbrechnungsfrei schaltbares Vorgelege-Wechselgetriebe für Kraftfahrzeuge**
Powershift type countershaft transmission for vehicles
Transmisson de changement de vitesse sous charge avec arbre intermédiaire

(30) Priorität: 23.12.1995 DE 19548622
(43) Veröffentlichungstag der Anmeldung: 25.06.1997
(73) Patentinhaber: Ford Global Technologies, Inc., Dearborn, Michigan 48126 (US)
(72) Erfinder: Krauss, Christian, 50733 Koeln (DE); Wollny, Thomas, 50997 Koeln (DE)
(74) Vertreter: Messulam, Alec Moses

(56) Entgegenhaltungen:
- DE-A- 3 715 880
- DE-A- 4 017 961
- DE-A- 4 031 851
- DE-A- 4 401 812

## Beschreibung

Die Erfindung bezieht sich auf ein zugkraftunterbrechungsfrei schaltbares Vorgelege-Wechselgetriebe für Kraftfahrzeuge, der im Oberbegriff des Patentanspruches 1 erläuterten Art.

Aus der DE-A-40 31 851 ist ein zugkraftunterbrechungsfrei schaltbares Vorgelege-Wechselgetriebe für Kraftfahrzeuge, der im Oberbegriff des Patentanspruches 1 erläuterten Art bekannt.

Bei diesem bekannten Vorgelege-Wechselgetriebe ist zwischen einem Schwungrad, das den Eingangsteil einer Reibungskupplung bildet, eine direkte, treibende Verbindung zu einer ersten Getriebeeingangswelle vorgesehen und der Ausgangsteil der Reibungskupplung ist mit einer die erste Getriebeeingangswelle umfassenden zweiten Getriebeeingangswelle in Form einer Hohlwelle verbunden. Auf der ersten Getriebeeingangswelle sind hierbei im wesentlichen die Festräder der Gangstufen und auf einer parallel zu den beiden Getriebeeingangswellen angeordneten Vorgelegewelle sind im wesentlichen die Losräder der Gangstufen angeordnet, wobei zwischen paarweise angeordneten Losrädern auf der Vorgelegewelle Klauen- oder Synchronkupplungen angeordnet sind um die einzelnen Gangstufen zu schalten.

Auf der zweiten Getriebeeingangswelle sind hierbei die Festräder der niedrigsten und der höchsten Gangstufe angeordnet und im Gegensatz zu den übrigen Gangstufen ist bei der zweithöchsten Gangstufe das Festrad auf der Vorgelegewelle und das Losrad auf der ersten Getriebeeingangswelle angeordnet.

Soll bei diesem bekannten Vorgelege-Wechselgetriebe das Kraftfahrzeug angefahren werden, so muß durch Einlegen der Schiebemuffe für den 1. Gang eine treibende Verbindung zwischen dem Losrad des 1. Ganges und der Vorgelegewelle hergestellt werden. Darauffolgend wird durch gesteuertes Einrücken der Reibungskupplung der Anfahrvorgang durchgeführt. Soll nunmehr vom 1. Gang in den 2. Gang geschaltet werden, so muß zu Beginn des Schaltvorganges die Reibungskupplung ausgerückt werden, damit die Schiebemuffe, die für den 1. und den 5. Gang vorgesehen ist, vom 1. Gang ausgelegt und in den 5. Gang eingelegt werden kann. Nunmehr wird wieder die Reibungskupplung gesteuert eingerückt, wodurch sich durch die schleifende Reibungskupplung in Verbindung mit der Übersetzung des 5. Ganges eine Anpassung der Drehzahl an die Einlegedrehzahl für den 2. Gang ergibt. Sobald die entsprechende Einlegedrehzahl erreicht ist, kann nun durch Verschieben der Verschiebemuffe für den 2. Gang ein stoßfreies und zugkraftunterbrechungsfreies Schalten in den 2. Gang erfolgen.

Das bekannte Vorgelege-Wechselgetriebe weist dabei jedoch den Nachteil auf, daß durch das zu Beginn der Schaltung vom 1. Gang in den 2. Gang erforderliche Ausrücken der Reibungskupplung eine kurzfristige Zugkraftunterbrechung auftritt, die zu einem unerwünschten Hochdrehen des Verbrennungsmotors führen kann.

Aus der EP-A-0 173 117 ist ein zugkraftunterbrechungsfrei schaltbares Vorgelege-Wechselgetriebe für Kraftfahrzeuge bekannt, bei dem ein Antriebsmotor über eine direkte Verbindung eine erste Getriebeeingangswelle antreibt, auf der eine Vielzahl von Festrädern von Gangstufen angeordnet ist und parallel zu der eine Vorgelegewelle angeordnet ist, auf der eine Vielzahl von Losrädern für die verschiedenen Gangstufen angeordnet sind, wobei zwischen paarweise angeordneten Losrädern jeweils eine Klauen- oder Synchronkupplung angeordnet ist.

Mit der Getriebeeingangswelle, die direkt mit dem Antriebsmotor verbunden ist, ist der Eingangsteil einer Reibungskupplung drehfest verbunden, deren Ausgangsteil mit einer zweiten Getriebeeingangswelle in Form einer Hohlwelle verbunden ist, auf der die Festräder der 5. Gangstufe und des Rückwärtsganges angeordnet sind.

Ein Anfahrvorgang des Kraftfahrzeuges wird durch Einlegen der Schiebemuffe in den 5. Gang begonnen, wobei zunächst die Reibungskupplung ausgerückt ist. Nachfolgend wird nun die Reibungskupplung gesteuert, also schleifend eingerückt, derart, daß, sobald die Einlegedrehzahl für den 1. Gang erreicht ist, die Schiebemuffe in den 1. Gang stoßfrei eingelegt werden kann und danach die Reibungskupplung ausgerückt wird, damit erfolgt die Drehmomentübertragung über den Radsatz des 1. Ganges. Zum Einlegen des 2. Ganges wird wieder die Reibungskupplung in gesteuerter Weise schleifend eingerückt, so daß die Einlegedrehzahl des 2. Ganges eingestellt werden kann, worauf bei Erreichen dieser Drehzahl die Schiebemuffe für den 2. Gang verschoben wird, um den Radsatz für den 2. Gang in Drehmomentübertragung zu bringen. Darauffolgend wird wieder die Reibungskupplung ausgerückt.

Das bekannte Vorgelege-Wechselgetriebe weist den Nachteil auf, daß, da der Anfahrvorgang über die Gangstufe des höchsten Ganges, z.B. des 5. Ganges, durchgeführt wird, die Reibungskupplung eine erhebliche Reibleistung bzw. Schlupffähigkeit aufweisen muß, wodurch meist nicht mehr die bei Krafterzeugen übliche einfache Einscheiben-Reibungskupplung angewendet werden kann, sondern eine in Schmieröl laufende nasse Mehrscheibenreibungskupplung eingesetzt werden muß.

Die Aufgabe der Erfindung ist es, ein Vorgelege-Wechselgetriebe der im Oberbegriff des Patentanspruches 1 erläuterten Art derart zu verbessern, daß unter Anwendung der einfacheren Einscheiben-Reibungskupplung ein zugkraftunterbrechungsfreies Schalten sämtlicher Gangstufen ermöglicht wird, ohne daß im kritischen Anfahrbereich beim Gangwechsel zwischen dem 1. und 2. Gang eine Drehmomentunterbrechung auftritt.

Gemäß der Erfindung wird diese Aufgabe gelöst, indem ein Vorgelege-Wechselgetriebe der im Oberbegriff des Patentanspruches 1 erläuterten Art, die im Kennzeichenteil des Patentanspruches 1 aufgezeigten Merkmale aufweist.

Dadurch, daß die zwischen dem Eingangsteil der Reibungskupplung und der ersten Getriebeeingangswelle vorgesehene direkte Verbindung als eine schaltbare Klauenkupplung ausgebildet ist und zwischen dem Ausgangsteil der Reibungskupplung und den beiden Getriebeeingangswellen eine schaltbare Synchronkupplung vorgesehen ist, kann der Anfahrvorgang über die gesteuerte Reibungskupplung und die Übersetzung des 1. Ganges erfolgen, worauf dann erst die direkte Verbindung zwischen dem Eingangsteil der Reibungskupplung und der ersten Getriebeeingangswelle durch die schaltbare Klauenkupplung hergestellt wird.

Wird nun zum Schalten vom 1. in den 2. Gang die Reibungskupplung ausgerückt, so bleibt ein Drehmomentweg über die geschaltete Klauenkupplung zum Radsatz des 1. Ganges aufrechterhalten und es erfolgt kein störendes Hochdrehen der Antriebsmaschine. Die schaltbare Synchronkupplung, die in Verbindung mit dem Ausgangsteil der Reibungskupplung steht, wird nunmehr in Eingriff mit dem Rädersatz des 5. Ganges gebracht und daraufhin wieder die Reibungskupplung gesteuert eingerückt. Sobald die Einlegedrehzahl des 2. Ganges erreicht ist, wird die Schiebemuffe des 2. Ganges verschoben, um den Radsatz des 2. Ganges kraftschlüssig zu machen und nach Ausrücken der Reibungskupplung erfolgt die Drehmomentübertragung nunmehr ausschließlich über den Radsatz des 2. Ganges.

In den weiteren Ansprüchen sind zweckmäßige Ausführungsformen der Erfindung erläutert.

Die Erfindung wird anhand eines in den beiliegenden Zeichnungen gezeigten Ausführungsbeispieles näher erläutert. Es zeigt:
- Fig. 1: ein Getriebeschaubild eines Vorgelege-Wechselgetriebes gemäß der Erfindung in Neutralstellung;
- Fig. 2: das Getriebeschaubild nach Fig. 1 in der Schaltstellung für einen Anfahrvorgang, die den Drehmomentübertragungsweg bildenden Getriebeteile sind hierbei in ihrer entsprechenden Schaltlage gezeichnet und der Drehmomentverlauf durch verstärkte Striche dargestellt;
- Fig. 3: das Getriebeschaubild nach Fig. 1 nach abgeschlossenem Anfahrvorgang im 1. Gang;
- Fig. 4: das Getriebeschaubild in der Schaltstellung für die Vorbereitungsphase eines Gangwechsels vom 1. Gang zum 2. Gang;
- Fig. 5: das Getriebeschaubild nach Fig. 1 während der Synchronisationsphase für eine Schaltung vom 1. zum 2. Gang und
- Fig. 6: das Getriebeschaubild nach Fig. 1 in seiner Schaltstellung nach einer abgeschlossenen Schaltung vom 1. Gang zum 2. Gang;
- Fig. 7: das Getriebeschaubild nach Fig. 1 in der Vorbereitungsphase für eine Schaltung vom 2. Gang in den 1. Gang und
- Fig. 8: das Getriebeschaubild nach Fig. 1 nach der durchgeführten Schaltung vom 2. Gang in den 1. Gang.

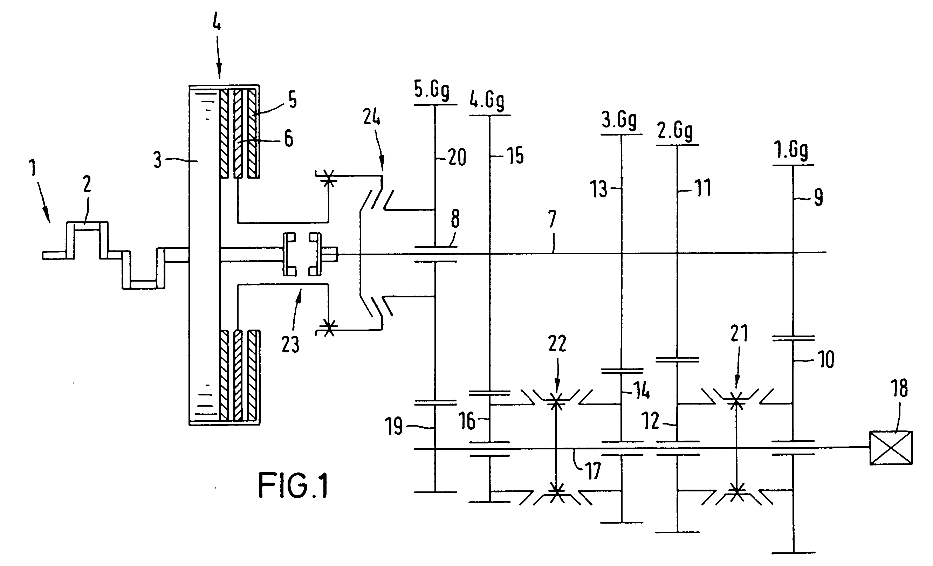

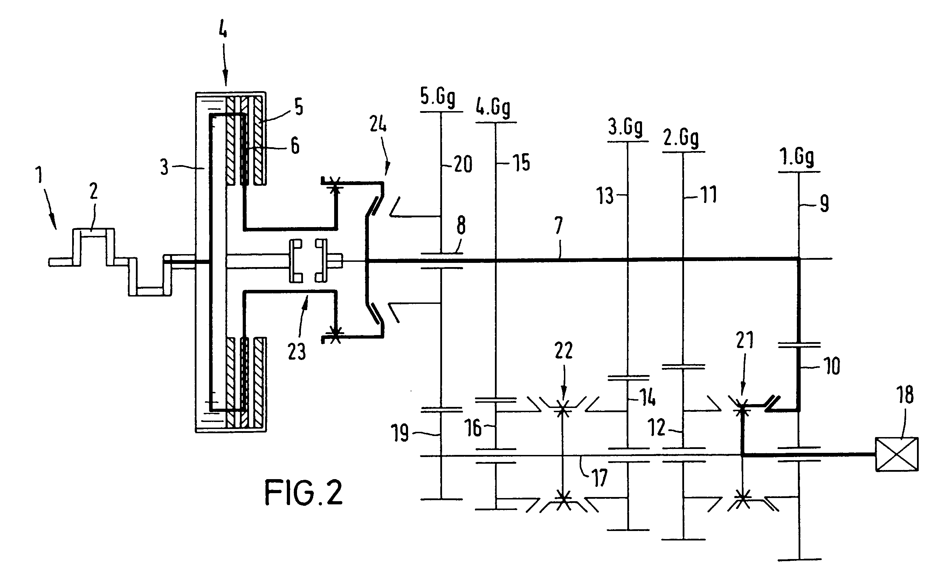

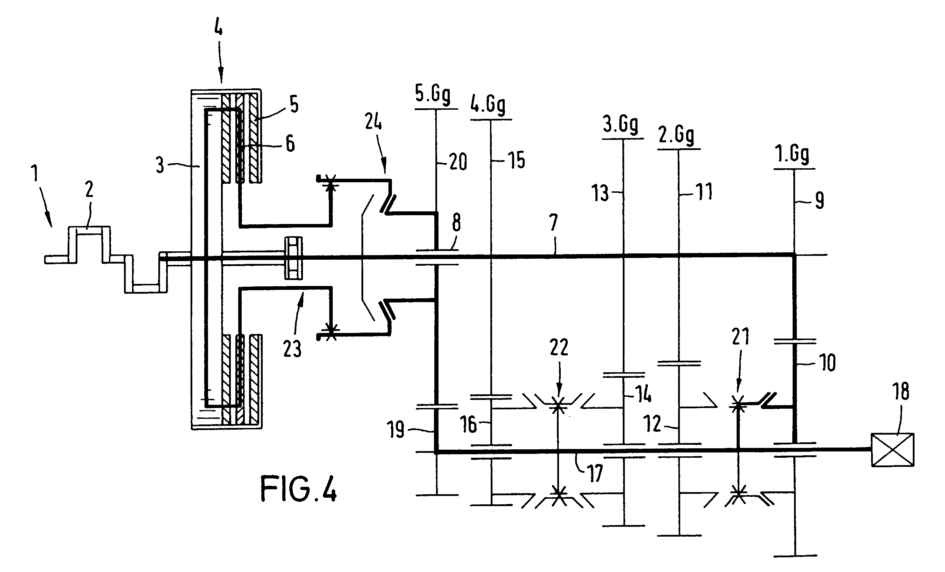

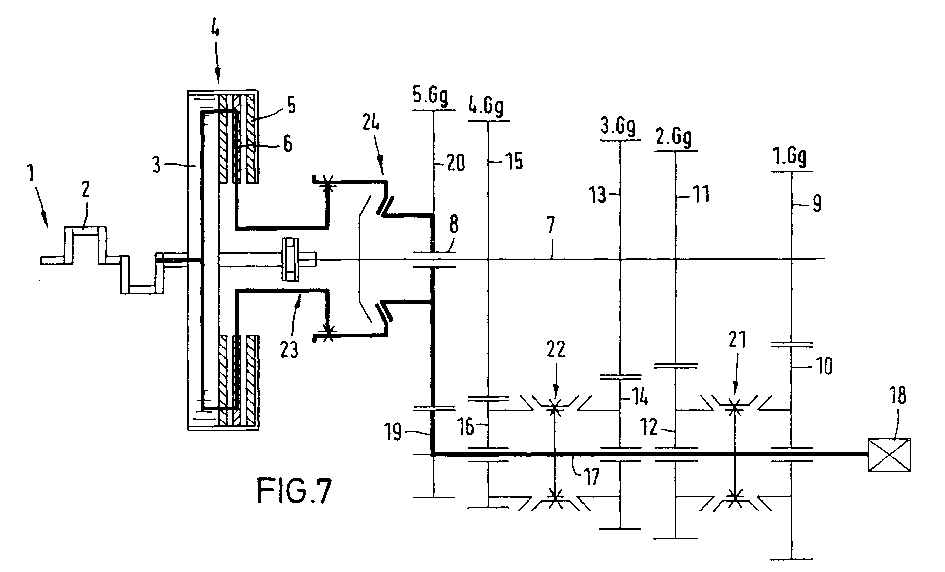

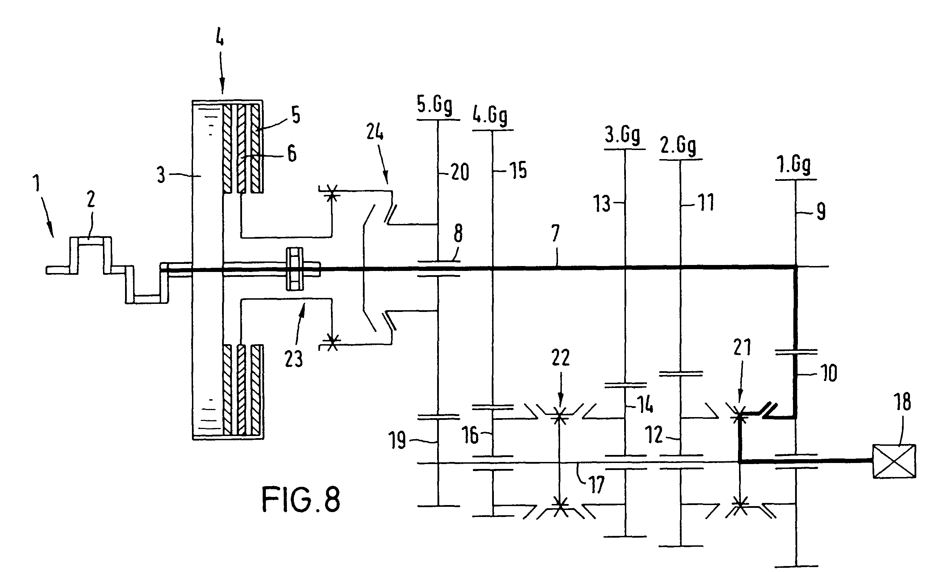

Der Aufbau des erfindungsgemäßen Vorgelege-Wechselgetriebes wird in Zusammenhang mit Fig. 1 erläutert, in der die einzelnen Getriebeelemente mit entsprechenden Bezugszeichen versehen sind, die sich in den weiteren Figuren 2 bis 8 lediglich mit dem Unterschied wiederholen, daß die in den Drehmomentweg eingeschalteten Getriebeteile in ihren geschalteten Lagen gezeichnet sind und der Kraftfluß durch verstärkte Striche angedeutet ist.

Ein Antriebsmotor 1, vorzugsweise ein Verbrennungsmotor mit einer Kurbelwelle 2 treibt ein Schwungrad 3 an, das in herkömmlicher Weise mit einer Reibscheibenkupplung 4 verbunden ist, die im wesentlichen aus einem Eingangselement 5 und einem Ausgangselement 6 besteht.

Das Vorgelege-Wechselgetriebe besteht aus einer ersten Getriebeeingangswelle 7 und einer zweiten Getriebeeingangswelle 8, wobei die zweite Getriebeeingangswelle als eine die erste Eingangswelle 7 umfassende Hohlwelle 8 ausgebildet ist. Im Vorgelege-Wechselgetriebe sind Zahnradsätze für die Gänge 1 bis 5 angeordnet, wobei vorzugsweise die Festräder 9, 11, 13 und 15 auf der ersten Getriebeeingangswelle 7 angeordnet sind und deren Gegenräder oder Losräder 10, 12, 14 und 16 auf einer parallel zu den Getriebeeingangswellen 7 und 8 angeordneten Vorgelegewelle 17 angeordnet sind. Die Vorgelegewelle 17 steht in Verbindung mit einem Endabtrieb 18.

Vom Zahnradsatz 19 und 20 des 5. Ganges ist das Festrad 19 auf der Vorgelegewelle 17 fest angeordnet und das Losrad 20 ist auf der zweiten Getriebeeingangswelle 8 angeordnet.

Zwischen zwei benachbarten Losrädern 10 und 12 bzw. 14 und 16 sind in an sich bekannter Weise Synchronkupplungen mit entsprechenden Schiebehülsen 21 und 22 angeordnet.

Im Gegensatz zum bekannten Stand der Technik ist die direkte Verbindung zwischen dem Schwungrad 3 und der ersten Getriebeeingangswelle 7 als eine schaltbare Klauenkupplung 23 ausgebildet und das Ausgangselement 6 der Reibungskupplung 4 steht nicht in direkter treibender Verbindung mit der ersten Getriebeeingangswelle 7, sondern ist mit dieser über eine schaltbare Synchronkupplung 24 bzw. mit dem auf der Hohlwelle 8 angeordneten Losrad 20 des 5. Ganges verbindbar.

Die Funktionsweise des erfindungsgemäßen Vorgelege-Wechselgetriebes wird nachfolgend im Zusammenhang mit den Figuren 2 bis 8 erläutert, in denen die den jeweiligen Drehmomentübertragungsweg bildenden Getriebeelemente durch eine größere Strichstärke hervorgehoben sind.

Aus Fig. 2 ist der Anfahrvorgang ersichtlich, bei dem bei zunächst noch ausgerückter Reibungskupplung 4 die Synchronkupplung 24 derart verschoben wird, daß eine treibende Verbindung zwischen dem Ausgangselement 6 der Reibungskupplung und der ersten Getriebeeingangswelle hergestellt wird. Wird nun durch gesteuertes Einrücken der Reibungskupplung 4 ein Drehmoment übertragen, so wird dieses Drehmoment über die Synchronkupplung 24 auf die erste Getriebeeingangswelle 7 übertragen und von dieser über den Zahnradsatz des 1. Ganges und der in der Stellung für den 1. Gang befindlichen Synchronkupplung 21 auf der Vorgelegewelle auf diese übertragen und dem Endabtrieb 20 zugeleitet.

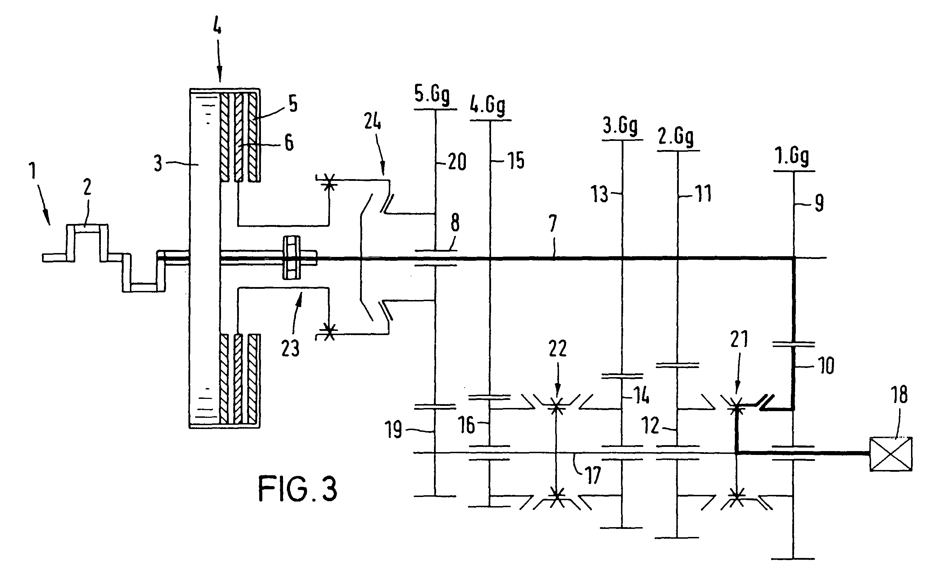

Ist der Anfahrvorgang abgeschlossen, so wird, wie aus Fig. 3 ersichtlich ist, die Reibungskupplung 4 ausgerückt und an ihrer Stelle die Klauenkupplung 23 eingerückt, die eine direkte treibende Verbindung zwischen dem Schwungrad 3 und der ersten Getriebeeingangswelle 7 herstellt. Der weitere Drehmomentfluß verbleibt über dem Zahnradsatz des 1. Ganges und dessen Synchronkupplung auf die Vorgelegewelle und zum Endabtrieb.

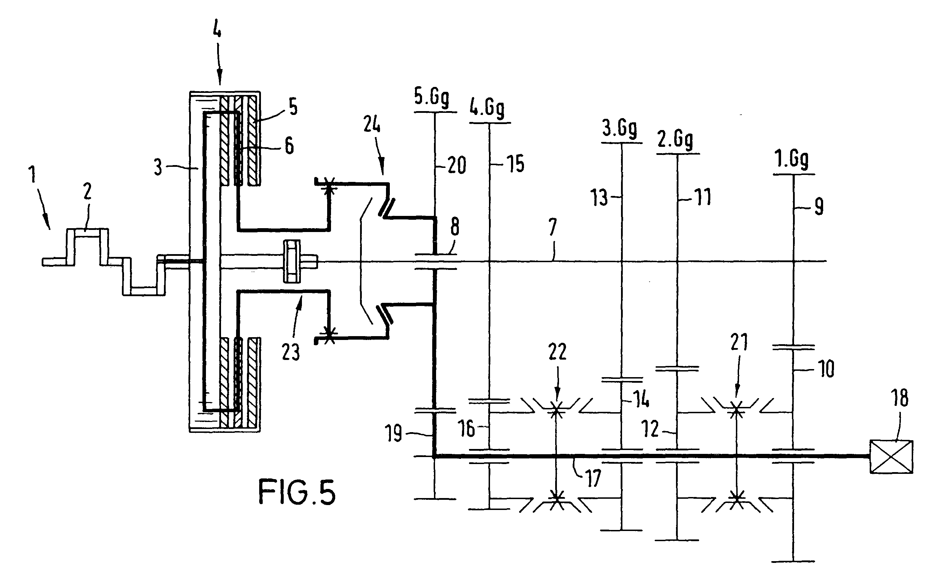

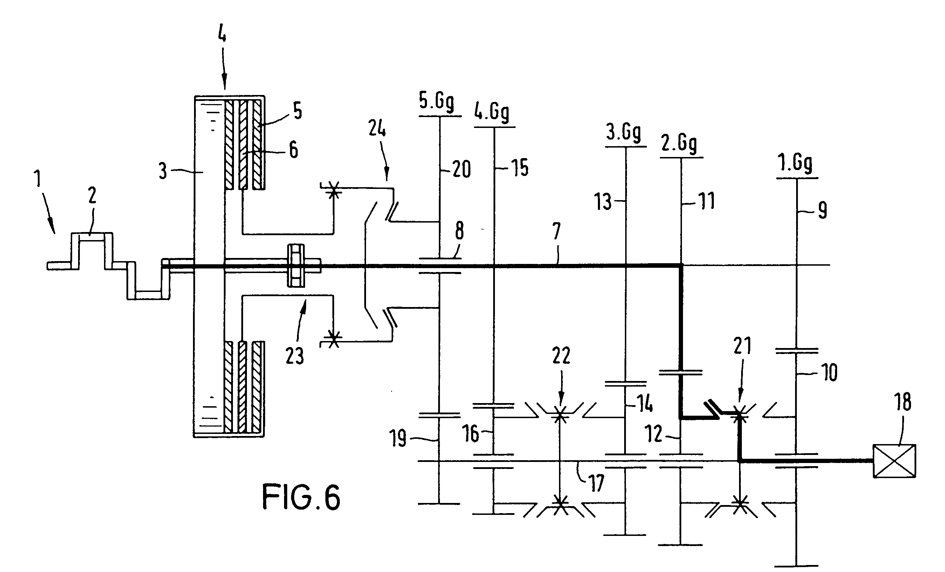

Soll nun ausgehend von der Schaltposition in Fig. 3 eine Schaltung vom 1. Gang in den 2. Gang vorbereitet werden, so wird zunächst die Synchronkupplung 24 in Eingriff mit dem Losrad 20 des 5. Ganges gebracht und darauffolgend wird die Reibungskupplung 4 gesteuert eingerückt, bis der durch den Zahnradsatz des 5. Ganges verlaufende Drehmomentenfluß eine Entlastung des Zahnradsatzes des 1. Ganges herbeiführt, wodurch dieser, wie aus Fig. 5 ersichtlich, in die Neutralstellung und anschließend in die aus Fig. 6 ersichtliche Stellung für den 2. Gang geschaltet werden kann. Nachfolgend dieser Schaltung wird die Reibungskupplung 4 wieder ausgerückt und der Drehmomentübertragungsfluß verläuft über die Klauenkupplung 23 und den Zahnradsatz des 2. Ganges.

Soll nun z.B. wieder eine Abwärtsschaltung vom 2. Gang zum 1. Gang erfolgen, so wird wieder die Reibungskupplung 4 gesteuert eingerückt, wodurch sie Drehmoment über die nach wie vor eingerückte Synchronkupplung 24 auf das Losrad 20 des 5. Ganges überträgt und das solange, bis wieder der Zahnradsatz des 2. Ganges drehmomentlos wird, weil die mit schleifender Kupplung eingelegte 5. Gangstufe die Drehmomentübertragung übernimmt. Daher kann wieder ohne Probleme eine Schaltung der Synchronkupplung aus der Stellung des 2. Ganges in die Neutralstellung und anschließend in die Stellung für den 1. Gang erfolgen und durch Ausrücken der Reibungskupplung 4 wird nachfolgend wieder ein Drehmomentfluß über die Klauenkupplung 23 und den Zahnradsatz des 1. Ganges bereitgestellt.

Durch die erfindungsgemäße Auslegung des Vorgelege-Wechselgetriebes wird der Vorteil erreicht, daß der Anfahrvorgang über den Zahnradsatz des 1. Ganges erfolgen kann und gleichzeitig wird durch die zusätzlichen Kupplungen 23 und 24 sichergestellt, daß bei einem Gangwechsel vom 1. Gang zum 2. Gang und dem hierbei erforderlichen Ausrücken der Reibungskupplung 4 kein Durchgehen des Antriebsmotors auftreten kann.

Selbstverständlich sind nachfolgend der erfindungsgemäßen Verknüpfung der gesteuerten Reibungskupplung 4 und der Getriebeeingangswellen 7 und 8 die verschiedensten Getriebeauslegungen möglich, ohne daß hierdurch der Umfang der vorliegenden Erfindung verlassen wird.

So kann z.B. das Ausgangselement der Reibungskupplung über weitere Kupplungen wahlweise mit dem Losrad des höchsten Ganges, mit der ersten Getriebeeingangswelle oder mit einem beliebigen weiteren Losrad eines Ganges verbunden werden.

Das Ausgangselement der Reibungskupplung kann auch über weitere Kupplungen wahlweise mit beliebigen Losrädern oder mit der ersten Getriebeeingangswelle verbunden werden.

Anstelle der einfachen Reibungskupplung kann selbstverständlich eine Mehrscheibennaßkupplung oder andere geeignete Reibungskupplungen verwendet werden.

## Patentansprüche

1. Vorgelege-Wechselgetriebe für Kraftfahrzeuge, mit einer von einem Antriebsmotor getriebenen Reibungskupplung (4) deren Eingangselement (5) mit einer ersten Getriebeeingangswelle (7) treibend verbindbar ist und deren Ausgangselement (6) mit einer zweiten Getriebeeingangswelle (8) in Form einer Hohlwelle verbindbar ist und wobei auf der ersten Getriebeeingangswelle (7) im wesentlichen Festräder (9, 11, 13 und 15) angeordnet sind, die mit auf einer Vorgelegewelle (17) angeordneten Losrädern (10, 12, 14 und 16) in ständigem Eingriff stehen und zwischen paarweise angeordneten Losrädern (10 und 12 bzw. 14 und 16) Synchronkupplungen (21 und 22) zum Schalten der verschiedenen Gangstufen angeordnet sind und wobei mit der zweiten als Hohlwelle ausgebildeten Getriebeeingangswelle (8) der Zahnrädersatz (19/20) des 5. Ganges verbunden ist,
**dadurch gekennzeichnet**, daß
- das Eingangselement (5) der Reibungskupplung (4) über eine formschlüssige Klauenkupplung (23) mit der ersten Getriebeeingangswelle (7) verbindbar ist und
- das Ausgangselement (6) der Reibungskupplung (4) über eine Synchronkupplung (24) entweder mit dem Losrad (20) des 5. Ganges oder mit der ersten Getriebeeingangswelle (7) verbindbar ist.

2. Vorgelege-Wechselgetriebe für Kraftfahrzeuge nach Anspruch 1,
**dadurch gekennzeichnet,** daß
- anstelle der einfachen Reibungskupplung (4) eine Mehrscheibennaßkupplung oder andere geeignete Reibungskupplungen verwendet werden.

## Claims

1. Countershaft transmission for vehicles with a friction clutch (4) driven by a drive motor, wherein the input element (5) of this friction clutch (4) can be connected in a driving way with a first gear input shaft (7) and wherein the output element (6) thereof can be connected with a second gear input shaft (8) in the form of a hollow shaft and wherein on the first gear input shaft (7) essentially fixed wheels (9, 11, 13 and 15) are positioned which are in constant contact with loose wheels (10, 12, 14 and 16), and are positioned between loose wheels (10 and 12 / 14 and 16) arranged in pairs and synchronous clutches (21 and 22) for shifting the different gear stages, and wherein the second gear input shaft (8) formed as a hollow shaft is in connection with the pinion set (19/20) of 5th gear,
characterised in that
- the input element (5) of the friction clutch (4) can be connected via a shape-locking jaw clutch (23) with the first gear input shaft (7) and
- the output element (6) of the friction clutch (4) can be connected via a synchronous clutch (24) either with the loose wheel (20) of the 5th gear or with the first gear input shaft (7).

2. Countershaft transmission for vehicles according to Claim 1
characterised in that
instead of the simple friction clutch (4) a multi-disc wet clutch or other suitable friction clutches are used.

## Revendications

1. Transmission intermédiaire pour véhicules automobiles, comprenant un accouplement (4) par friction entraîné par un moteur d'entraînement, dont l'élément d'entrée (5) peut être mis en liaison menante avec un premier arbre d'entrée de transmission (7), et dont l'élément de sortie (6) peut être relié à un second arbre d'entrée de transmission (8) revêtant la forme d'un arbre creux, des pignons fixes (9, 11, 13 et 15), calés pour l'essentiel sur le premier arbre d'entrée de transmission (7), étant en prise permanente avec des pignons fous (10, 12, 14 et 16) calés sur un arbre intermédiaire (17), des accouplements synchrones (21 et 22) étant interposés entre des pignons fous (10 et 12, respectivement 14 et 16) agencés par paires, en vue d'enclencher les différents rapports, et le jeu de pignons (19/20) affecté à la cinquième vitesse étant relié au second arbre d'entrée de transmission (8), réalisé sous la forme d'un arbre creux,
caractérisée par le fait que
- l'élément d'entrée (5) de l'accouplement (4) par friction peut être relié au premier arbre d'entrée de transmission (7) par l'intermédiaire d'un accouplement (23) à crabots agissant par concordance de formes, et
- l'élément de sortie (6) dudit accouplement (4) par friction peut être relié, par l'intermédiaire d'un accouplement synchrone (24), soit au pignon fou (20) affecté à la cinquième vitesse, soit au premier arbre d'entrée de transmission (7).

2. Transmission intermédiaire pour véhicules automobiles, selon la revendication 1,
caractérisée par le fait
- qu'un accouplement humide à plusieurs disques, ou d'autres accouplements par friction appropriés, sont employés à la place du simple accouplement (4) par friction.
